Europäisches Patentamt

European Patent Office

Office européen des brevets

(19)

(11) Veröffentlichungsnummer : **0 458 844 B1**

(12) **EUROPÄISCHE PATENTSCHRIFT**

(45) Veröffentlichungstag der Patentschrift :
**12.05.93 Patentblatt 93/19**

(21) Anmeldenummer : **90903316.9**

(22) Anmeldetag : **16.02.90**

(86) Internationale Anmeldenummer :
**PCT/DE90/00101**

(87) Internationale Veröffentlichungsnummer :
**WO 90/09358 23.08.90 Gazette 90/20**

(51) Int. Cl.⁵ : **C04B 28/26, C08G 18/38**

(54) **VERFAHREN ZUM HERSTELLEN EINER SPANPLATTE UND NACH DIESEM VERFAHREN HERGESTELLTE SPANPLATTE.**

(30) Priorität : **16.02.89 DE 3904729**

(43) Veröffentlichungstag der Anmeldung :
**04.12.91 Patentblatt 91/49**

(45) Bekanntmachung des Hinweises auf die
Patenterteilung :
**12.05.93 Patentblatt 93/19**

(84) Benannte Vertragsstaaten :
**AT CH DE LI**

(56) Entgegenhaltungen :
**DE-A- 2 460 834**
**DE-A- 3 718 297**
**DE-A- 3 719 449**
**FR-A- 2 321 461**
**US-A- 4 097 423**

(56) Entgegenhaltungen :
**Chemical Abstracts, vol. 104, No. 22, June
1986 (Columbus, Ohio, US) see page 349, abstract 191929h, & SU, A, 1209644 (ALL-UNION
SCIENTIFIC RESEARCH INSTITUTE OF HA-
LURGY, KALUGA) 7 February 1986**

(73) Patentinhaber : **KHW BAUCHEMIE GMBH
Industriestrasse 165
W-5000 Köln 50 (DE)**

(72) Erfinder : **WILHELMY, Karl-Heinz
Krauskaulerweg 3
W-5000 Köln 50 (DE)**
Erfinder : **SCHUBERT, Uwe
Siebenmorgenweg 2-10
W-5300 Bonn 3 (DE)**

(74) Vertreter : **Bauer, Wulf, Dr.
Bayenthalgürtel 15
W-5000 Köln 51 (Marienburg) (DE)**

EP 0 458 844 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Verfahren zur Herstellung einer Spanplatte aus Spänen aller Art, insbesondere aus Holzspänen, und einem Bindemittel, bei dem auf die in einem Mischer befindlichen Späne das Bindemittel aufgebracht, vorzugsweise aufgesprüht, wird und die erhaltene Mischung zu Platten gepreßt wird, wobei das Bindemittel Wasserglas und ein einkomponentiges, vernetzbares Isozyanatharz enthält.

Unter dem Begriff Spanplatte werden hierbei plattenförmige Werkstoffe, die aus Spänen unterschiedlicher Herkunft geklebt und verprellt sind, bezeichnet. Als Späne sollen insbesondere Holzspäne eingesetzt werden, spanartige Teile anderer Art und Herkunft können aber ebenfalls verwendet werden, beispielsweise Textilschnipsel und -fasern, Papierrückstände, verholzte, zerkleinerte Fasermaterialien wie z. B. Reisstroh, Holzmehle, Blähglimmer. Als Bindemittel werden häufig Phenolharze verwendet, derartige Harze sind jedoch gesundheitsschädlich, so daß man mehr und mehr dazu übergeht, den Phenolanteil möglichst gering zu halten.

Bei dem aus der DE-OS 37 18 297 vorbekannten Verfahren der eingangs genannten Art wird als Bindemittel kein Phenolharz eingesetzt, das Bindemittel (die Leimflotte) besteht aus einem Gemisch aus Wasserglas, einem organischen Wasserglashärter in Form eines Alkandisäure-Dimethylesters und/oder -Äthylesters, einem einkomponentigem, vernetzbaren Isozyanatharz und reaktivem Kalk. Eine Mischung aus diesem Bindemittel wird auf die in einem Mischer befindlichen Späne aufgesprüht und die erhaltene Mischung unter Zufuhr von Prozellwärme und Druck zu Platten gepreßt.

Dieses Verfahren hat einerseits dadurch einen Nachteil, daß während des Pressens eine Wärmezufuhr erfolgen muß, die zugeführte Wärme ist notwendig, um das in der Mischung enthaltene Wasser herauszutreiben. Andererseits liegt der Nachteil darin, daß Maßnahmen getroffen werden müssen, um die fertige Spanplatte so auszurüsten, daß sie entweder nicht brennt oder bei einer Verbrennung keine Gifte, beispielsweise NCO, freiwerden.

Hiervon ausgehend liegt der Erfindung die Aufgabe zugrunde, ausgehend von dem Verfahren zur Herstellung einer Spanplatte der eingangs genannten Art und der so nach diesem Verfahren hergestellten Spanplatte ein Verfahren zur Herstellung einer Spanplatte bzw. eine derartige Spanplatte anzugeben, die ohne Zufuhr von Prozeßwänme gepreßt werden kann und bei der die Brennbarkeit durch Zusatz von mineralischen Anteilen erniedrigt ist. Dabei soll das Bindemittel gesundheitsunschädlich sein und eine kostengünstige Herstellung von Spanplatten ermöglichen, wobei auch ein ausreichendes Plattengewicht pro Einheitsfläche erzielt werden soll.

Diese Aufgabe wird verfahrensmäßig durch ein Verfahren gelöst, bei dem das Bindemittel weiterhin (a) ein hydraulisches, bei einem Umsetzen mit Wasser $Ca(OH)_2$ bildendes Bindemittel, vorzugsweise Zement, das in einer zumindest zur Abbindung desjenigen Wassers ausreichenden Menge vorhanden ist, das einerseits bei der Reaktion von Wasserglas und Isozyanat anfällt und das andererseits in den Bestandteilen, insbesondere in den Spänen, enthalten ist, und (b) bei Raumtemperatur flüssige, bei der Hydrolyse Kieselsäure bildende siliciumorganische Verbindungen, vorzugsweise Kieselsäure, enthält, die in einer zur Umsetzung des $Ca(OH)_2$ zu $CaSiO_3$ ausreichenden Menge vorhanden sind.

Vorrichtungsmäßig enthält das Bindemittel der Spanplatte zusätzlich (a) ein hydraulisches, bei einem Umsetzen mit Wasser $Ca(OH)_2$ bildendes Bindemittel, vorzugsweise Zement, in einer zumindest zur Abbindung desjenigen Wassers ausreichenden Menge, das einerseits bei der Reaktion von Wasserglas und Isozyanat anfällt und andererseits in den Bestandteilen, insbesondere in den Spänen, enthalten ist und (b) bei Raumtemperatur flüssige, bei der Hydrolyse Kieselsäure bildende, siliciumorganische Verbindungen, vorzugsweise Kieselsäure, die in einer zur Umsetzung des $Ca(OH)_2$ zu $CaSiO_3$ ausreichenden Menge vorhanden sind.

Bei diesem Verfahren zur Herstellung einer Spanplatte bzw. bei der derart hergestellten Spanplatte sind die Bestandteile des Bindemittels so gewählt, daß alles anfallende Wasser chemisch (kristallin) gebunden wird, es bedarf daher beim Preßvorgang nicht des Zufuhrs von Prozeßwärme, um vorhandenes Wasser auszutreiben. Hierdurch wird Energie bei der Herstellung der Spanplatten eingespart. Nach der Reaktion der Bindemittel ist die Spanplatte weitgehend wasserresistent und vorzugsweise sogar wasserfest. Von den Reaktionsprodukten des Zements mit Wasser ist das anfallende $Ca(OH)_2$ wasserlöslich, dieses wird jedoch erfindungsgemäß durch die siliciumorganische Verbindung, vorzugsweise Kieselsäureester, umgewandelt zu dem wasserunlöslichen $CaSiO_3$. Die Verwendung des relativ billigen Bindungsmittels Zement führt zu einer preisgünstigen Spanplatte, der mineralische Anteil wird hierdurch erhöht, dies ergibt wiederum einen höheren Brandschutz.

Isozyanat, das vorzugsweise als Di-Isozyanat vorliegt, setzt sich mit dem Wasserglas, vorzugsweise dem Kaliwasserglas, um, das dabei freiwerdende Wasser wird, wie oben beschrieben, durch das hydraulische Bindemittel aufgenommen.

Im Gegensatz zur lehre der DE-OS 37 18 297 wird das Isozyanat nicht zur $H_2O$-Bindung, sondern als zusätzlicher Binder eingesetzt. Die siliciumorganische Verbindung, im folgenden stets als Kieselsäureester bezeichnet, ist zumindest in einer Menge vorhanden, die zur Umsetzung des Calciumhydroxids zu Calciumsilicat ausreicht, der darübergehende Anteil an Kieselsäureester wirkt als organischer Härter für das Wasserglas.

Als vorteilhaft hat es sich erwiesen, als Wasserglas ein Alkaliwasserglas und hier wiederum vorzugsweise Kaliwasserglas oder ein Gemisch aus überwiegend Kaliwasserglas (vorzugsweise mehr als 80 %) mit einem anderen Alkaliwasserglas einzusetzen. Es hat sich gezeigt, daß bei Natronwasserglas salzartige Ausblühungen (Ausscheidungen der Soda) auftreten, ähnliches wurde bei Kaliwasserglas nicht beobachtet. Das Wasserglas wird in einer Grädigkeit verwendet, die eine versprühbare Mischung der Bestandteile des Bindemittels (der Leimflotte) ergibt.

Weiterhin wird vorgeschlagen, daß das Bindemittel zusätzlich Magnesiumoxid enthält. Magnesiumoxid wird ebenfalls durch Kieselsäureester umgesetzt, nämlich zu $MgSiO_3$. Als Zusatz werden bis zu maximal acht Masse-Prozent bezogen auf den Anteil der Späne zugegeben. Durch Zugabe von MgO kann Isozyanat eingespart werden. Isozyanat liegt typischerweise in acht Masse-Prozent vor, durch MgO kann der Anteil bis auf zwei Masse-Prozent (bezogen auf die Gesamtheit der Bestandteile), sowie auf noch geringere Anteile herabgedrückt werden. Durch Zugabe von MgO wird der mineralische Anteil in der Spanplatte weiter erhöht, es wird eine gute Oberfläche erhalten, weiterhin wird das spezifische Gewicht der Spanplatte vorteilhafterweise erhöht und kann in Bereiche gebracht werden, die von der Industrie gewünscht und gefordert werden. Zu leichte Raumgewichte, wie sie sonst erhalten werden, können hierdurch vermieden werden. Bei Zugabe MgO muß der Anteil an Kieselsäureester entsprechend angepaßt werden.

Weiterhin hat es sich als vorteilhaft erwiesen, dem Bindemittel zusätzlich Alkandisäure-Dimethylester und/oder -Äthylester zuzufügen. Bei diesen Estern handelt es sich um organische Härter für Wasserglas, bei Zugabe zu Wasserglas verseift der Ester aufgrund der vorhandenen Natronlauge und es entsteht eine Säure und ein Alkohol. Vorteilhaft ist hierbei, daß dieser Prozell einerseits nicht spontan abläuft, so daß sich kontrollierbare Topfzeiten erreichen lassen, und andererseits, daß bei der Aushärtung Wasser abgespalten wird. Die kontrollierbare Topfzeit ist für die Verarbeitung vorteilhaft und vermeidet, zu kurze oder zu lange Aushärtezeiten, das Herstellungsverfahren wird durch Zugabe der Härter besser steuerbar. Der Alkohol reagiert mit dem überschüssigen Isozyanat unter Bildung von Polyurethan. Das Wasser wird durch das überschüssige hydraulische Bindemittel aufgenommen.

Weiterhin ist vorteilhaft, als Zement einen Portlandzement zu verwenden, vorzugsweise mit einem Tricalciumaluminatgehalt größer als acht Masse-Prozent. Vorzugsweise werden kalkreiche Zemente eingesetzt, beispielsweise Portlandzemente der Klassen PZ 35 bis PZ 45 F.

Insgesamt hat sich gezeigt, daß die nach dem erfindungsgemäßen Verfahren hergestellten Spanplatten eine sehr glatte Oberfläche aufweisen, so daß eine zusätzliche Behandlung der Oberfläche durch Zugabe von Bindemittel oder staubförmigem Material nicht notwendig ist. Durch die hohen Anteile an mineralischen Bestandteilen ist die Platte gut mit Zement gebundenen Werkstoffen belegbar, beispielsweise können Platten mit Zementkleber aufgeklebt werden. Es lassen sich preisgünstig Spanplatten der Brandklasse V 100 herstellen, die Möglichkeit, höhere Brandklassen zu erreichen, ist durch Zugabe von höheren Anteilen der mineralischen Bestandteile, insbesondere Zement und/oder MgO, erreichbar.

Der Vorteil der Spanplatten nach dem erfindungsgemäßen Verfahren liegt in der hohen Wasserfestigkeit, hohen mechanischen Festigkeit, ausgezeichneten Oberfläche und der Möglichkeit, die Platten nach den normalen, für einen Tischler üblichen Verfahren zu bearbeiten. Eine Gesundheitsgefährdung ist weitestgehend ausgeschlossen, die abgebundenen Isozyanatharze entweichen, wie in Versuchen nachgewiesen wurde, erst bei ausgesprochen hohen Temperaturen, die deutlich über 1000 Grad C liegen.

Das Isozyanatharz ist vorzugsweise ein Di-Isozyanatharz, grundsätzlich können aber auch andere Polyisozyanate Verwendung finden. Als konkretes Beispiel für ein Isozyanatharz wird Diphenylmethan-4,4'Di-Isozyanat, auch MDI genannt, angegeben.

Die Bestandteile des Bindemittels, also Wasserglas, Isozyanat, Zement und Kieselsäureester, lassen sich gut zu einer dünnflüssigen Schlemme vermischen, die im Sprühverfahren auf die Späne aufgetragen wird. Es hat sich als vorteilhaft erwiesen, die Späne, insbesondere Holzspäne, vor dem Vermischen geringfügig anzufeuchten.

Im folgenden werden nicht einschränkend zu verstehende Ausführungsbeispiele der Erfindung beschrieben:

Beispiel 1

Eine Leimflotte wird hergestellt aus 100 Masseteilen Kaliwasserglas, 3 Masseteilen Alkandisäure-Dimethylester und -äthylester, 3 Masseteilen Isozyanat (Desmodur 1000) und Kieselsäureester (im Gewichtsverältnis 9 : 1) und 35 Masseteilen Portlandzement PZ 45 F. Diese Bestandteile ergeben eine dünnflüssige Mischung. Sie wird auf 600 Masseteile Holzspäne, die vorher geringfügig angefeuchtet wurden, aufgesprüht und anschließend gründlich durchmischt. Nach Pressen in einer Presse ohne Zuführung von Prozeßwärme erhält man eine harte, gebrauchsfähige Spanplatte. Die Topfzeit beträgt 10 Minuten, nach etwa einer Stunde ist die Mischung vollständig ausgehärtet.

Beispiel 2

150 kg grobe Holzspäne werden mit einer Leimflotte besprüht, die wie folgt hergestellt ist:

| | |
|---|---|
| 1 kg | Alkandisäure-Dimethylester und -Äthylester |
| 3 kg | Kieselsäureester in Xylol gelöst, Feststoffanteil 18 % |
| 1,5 kg | Polykieselsäure |
| 18 kg | Isozyanat (Desmodur VL) |
| 18 kg | Kaliwasserglas und |
| 3,5 kg | Portlandzement PZ 45 F. |

Die Leimflotte wird auf die zuvor geringfügig angefeuchteten Holzspäne aufgesprüht, nach Mischung und Pressung mit 2,5 N/mm$^2$ erhält man eine voll gebrauchsfähige Spanplatte.

Beispiel 3

25 kg feine Holzspäne werden vermischt mit einer Leimflotte bestehend aus

| | |
|---|---|
| **Organischer Härter (Alkandisäure-Dimethylester und -Äthylester)** | **160 g** |
| **Kieselsäureester gelöst in Xylol, Feststoffanteil 18 %** | **560 g** |
| **Polykieselsäure** | **180 g** |
| **Isozyanat (Desmodur VL)** | **3,5 Kg** |
| **Kaliwasserglas** | **3,5 Kg** |
| **Zement (Portlandzement)** | **720 g** |

Nach Mischung erhält man eine gut zu bearbeitende Spanplatte mit glatter Oberfläche.
Desmodur ist ein eingetragenes Warenzeichen.

**Patentansprüche**

1. Verfahren zur Herstellung einer Spanplatte aus Spänen aller Art, insbesondere aus Holzspänen und einem Bindemittel, bei dem auf die in einem Mischer befindlichen Späne das Bindemittel aufgebracht, vorzugsweise aufgesprüht, wird und die erhaltene Mischung zu Platten gepreßt wird, wobei das Bindemittel enthält (a) Wasserglas, (b) ein einkomponentiges, vernetzbares Isozyanatharz, (c) ein hydraulisches, bei einem Umsetzen mit Wasser Ca(OH)$_2$ bildendes Bindemittel, vorzugsweise Zement, in einer zumindest zur Abbindung desjenigen Wassers ausreichenden Menge vorhanden ist, das einerseits bei der Reaktion von Wasserglas und Isozyanat anfällt und das andererseits in den Bestandteilen, insbesondere in den Spänen, enthalten ist und (d) bei Raumtemperatur flüssige, bei der Hydrolyse Kieselsäure bildende siliciumorganische Verbindungen, vorzugsweise Kieselsäureester, die in einer zur Umsetzung des Ca(OH)$_2$ zu CaSiO$_3$ ausreichenden Menge vorhanden sind.

2. Verfahren nach Anspruch 1, dadurch gekennzeichnet, daß als Wasserglas ein Alkaliwasserglas und hier wiederum vorzugsweise Kaliwasserglas oder ein Gemisch aus überwiegend Kaliwasserglas (vorzugsweise mehr als 80 %) mit einem anderen Alkaliwasserglas (z.B. Natronwasserglas) eingesetzt wird.

3. Verfahren nach Anspruch 1 oder 2, dadurch gekennzeichnet, daß das Bindemittel zusätzlich Magnesiumoxid enthält.

4. Verfahren nach einem der Ansprüche 1 bis 3, dadurch gekennzeichnet, daß das Bindemittel zusätzlich Alkandisäure-Dimethylester und/oder -Äthylester enthält.

5. Verfahren nach einem der Ansprüche 1 bis 4, dadurch gekennzeichnet, daß die Pressung der Platten ohne Wärmezufuhr ( Zufuhr von Prozeßwärme ) erfolgt.

6. Verfahren nach einem der Ansprüche 1 bis 5, dadurch gekennzeichnet, daß ein Portlandzement verwendet wird, der entweder einen Tricalciumaluminatgehalt größer als acht Masse-Prozent aufweist oder einen $C_3$ S-Gehalt von rund 62 % hat.

7. Verfahren nach einem der Ansprüche 1 bis 6, dadurch gekennzeichnet, daß man siliciumorganische Verbindungen verwendet, die

   (a) Tetraalkylsilane der allgemeinen Formel

   $$(I) \qquad Si(OR^1)_nR^2m$$

   enthalten, wobei

   $R^1$ für einen Methyl-, Äthyl-, n-Propyl-, i-Propyl-, n-Butyl-, i-Butyl-, t-Butyl- oder Phenylrest und

   $R^2$ für einen Methyl-, Äthyl-, Phenyl-, Vinyl- oder einen Methoxy-, Äthoxy-, n-Butyloxy-, i-Butyloxy-, t-Butyloxy- oder  Phenoxyrest steht und

   die Summe aus n und m = 4 ist mit der Maßgabe, daß n = 2, 3 oder 4 ist und/oder

   (b) Poly(dialkylsiloxane ) der allgemeinen Formel

   $$(II) \qquad HO(Si(R^1)_2-O-)_x-H$$

   enthalten, wobei

   $R^1$ die oben genannte Bedeutung besitzt.

8. Verfahren nach Anspruch 7, dadurch gekennzeichnet, daß man siliciumorganische Verbindungen verwendet, die der allgemeinen Formel (I) entsprechen, wobei

   $R^1$ für einen Äthyl-, n-Propyl- oder i-Propylrest und

   $R^2$ für einen n-Butyloxyrest steht.

9. Verfahren nach einem der Ansprüche 1 bis 8, dadurch gekennzeichnet, daß das Massenverhältnis von Wasserglas zu Isozyanat 1 zu 0,5 bis 1,5, vorzugsweise 1 zu 0,7 bis 0,8 beträgt.

10. Verfahren nach einem der Ansprüche 1 bis 9, dadurch gekennzeichnet, daß die siliciumorganische Verbindung in einer Menge vorhanden ist, die auch für eine Reaktion mit MgO ausreicht.

11. Spanplatte, dadurch gekennzeichnet, daß sie nach einem der Verfahren der Ansprüche 1 bis 10 hergestellt ist.

## Claims

1. Process for manufacturing a chip board from chips of all kind, especially wood chips and from a binding agent in which process the binding agent is applied to, preferably sprayed onto the chips which are in a mixer, and boards are pressed from the mixture obtained, wherein the binding agent comprises (a) waterglass, (b) a single-component cross-linkable isocyanate, (c) a hydraulic binder preferably cement, which when reacting with water produces $Ca(OH)_2$, and is present in an amount to react with the very water, which on one hand is produced in the reaction of waterglass and isocyanate and on the other hand is contained in the constituents, especially in the chips, and (d) silicon-organic compounds, preferably siliceous ester, which are liquid at room temperature, produce silicic acid during hydrolysis, and are present in an amount sufficient for reaction of $Ca(OH)_2$ to $CaSiO_3$.

2. The process of claim 1, characterized in that the waterglass used is an alkali waterglass and preferably potassium waterglass or a mixture of mainly potassium waterglass (preferably more than 80 %) with another alkali waterglass (e.g. sodium waterglass).

3. The process of claim 1, characterized in that the binding agent furtheron comprises magnesiumoxide.

4. The process of one of the claims 1 to 3, characterized in that the binding agent furtheron comprises alkandic acid dimethyl-ester and/or alkandic ethylene-ester.

5. The process of one of the claims 1 to 4, characterized in that the boards are pressed without supplying additional heat (feeding in process heat).

6. The process of one of the claims 1 to 5, characterized in that a portland cement is used, which either has a content of tricalciumaluminate above eight weight-percent or a content of $C_3S$ of about 62 %.

7. The process of one of the claims 1 to 6, characterized in that silicium-organic compounds are used comprising

(a) tetraalkylsilane of the general formula

$$(I) \qquad Si(OR^1)_nR^2m$$

wherein

$R^1$ is a methyl-, ethyl-, n-propylene-, i-propylene-, n-butylene-, i-butylene-, t-butylene, or phenylene-residual and

$R^2$ is a methyl-, ethyl-, phenylene-, vinyl- or a methoxy-, ethoxy-, n-butyloxy-, i-butyloxy-, t-butyloxy- or phenoxy-residual, and

the summ n + m = 4 with the restriction, that n = 2, 3 or 4 and/or

(b) poly(dialkylsiloxane) of the general formula

$$(II) \qquad HO(Si(R^1)_2\text{-}O\text{-})_x\text{-}H$$

wherein

$R^1$ has the same meaning as above.

8. The process of claim 7, characterized in that, silicium-organic compounds are used, which are equivalent to the general formula (1) wherein

$R^1$     is an ethyl-, n-propylene- or i-propylene-residual and

$R^2$     is a n-butyloxy-residual.

9. The process of one of the claims 1 to 8, characterized in that the weight-ratio of waterglass and isocyanate is 1 to 0.5 - 1.5, preferably 1 to 0.7 - 0.8.

10. The process of one of the claims 1 to 9, characterized in that the silicium-organic compound is present in an amount sufficient for a reaction with MgO.

11. Chipboard characterized in that it is produced according to the process of one of the claims 1 to 10.

**Revendications**

1. Procédé pour fabriquer un panneau de particules constitué de particules de toute sorte, plus particulièrement de particules (copeaux) de bois, et d'un liant, procédé selon lequel on applique le liant, de préférence par pulvérisation, sur les particules qui se trouvent dans un mélangeur et on moule le mélange obtenu par compression pour en faire des panneaux, le liant contenant (a) du verre soluble, (b) une résine d'isocyanate réticulable à une seule composante, (c) un liant hydraulique capable de former $Ca(OH)_2$ en réagissant avec de l'eau, de préférence du ciment, en une quantité au moins suffisante pour fixer l'eau qui, d'une part, est engendrée lors de la réaction du verre soluble et de l'isocyanate et qui, d'autre part, se trouve dans les constituants, notamment dans les particules, et (d) des composés organo-siliciques liquides à la température ambiante, de préférence des esters siliciques, donnant naissance à de l'acide silicique lors de l'hydrolyse, composés qui sont présents en une quantité suffisante pour la conversion du $Ca(OH)_2$ en $CaSiO_3$.

2. Procédé selon la revendication 1 caractérisé en ce qu'on utilise, comme verre soluble, un verre soluble de métal alcalin, plus particulièrement de potassium, ou un mélange constitué principalement de verre soluble potassique (de préférence plus de 80 %) et d'un autre verre soluble de métal alcalin (par exemple du verre soluble sodique).

3. Procédé selon l'une des revendications 1 et 2, caractérisé en ce que le liant contient en outre de l'oxyde de magnésium.

4. Procédé selon l'une quelconque des revendications 1 à 3, caractérisé en ce que le liant contient en outre un alcane-dioate de diméthyle et/ou de diéthyle.

5. Procédé selon l'une quelconque des revendications 1 à 4, caractérisé en ce que le moulage par compression conduisant à des panneaux est effectué sans apport de chaleur (apport de chaleur de service).

6. Procédé selon l'une quelconque des revendications 1 à 5, caractérisé en ce qu'on utilise un ciment portland qui a une teneur en aluminate tricalcique supérieure à 8 % en masse ou qui a une teneur en $C_3S$ d'environ 62 %.

7. Procédé selon l'une quelconque des revendications 1 à 6, caractérisé en ce qu'on utilise des composés organosiliciques qui contiennent :
   (a) des tétraalkyl-silanes répondant à la formule générale I :

$$(I) \qquad Si(OR^1)_n R^2_m$$

dans laquelle
   $R^1$   représente un radical méthyle, éthyle, n-propyle, isopropyle, n-butyle, isobutyle, tert-butyle ou phényle,
   $R^2$   représente un radical méthyle, éthyle, phényle ou vinyle ou un radical méthoxy, éthoxy, n-butoxy, isobutoxy, tert-butoxy ou phénoxy, et
   la somme $(n + m)$ est égale à 4, avec la condition que $n$ soit égal à 2, à 3 ou à 4, et/ou
   (b) des poly-(dialkylsiloxanes) répondant à la formule générale II :

$$(II) \qquad HO(Si(R^1)_2\text{-}O\text{-})_x\text{-}H$$

dans laquelle $R^1$ a la signification qui lui a été donnée plus haut.

8. Procédé selon la revendication 7 caractérisé en ce qu'on utilisé des composés organo-siliciques de formule générale I dans lesquels
   $R^1$   représente un radical éthyle, n-propyle ou isopropyle et
   $R^2$   représente un radical n-butoxy.

9. Procédé selon l'une quelconque des revendications 1 à 8, caractérisé en ce que le rapport massique du verre soluble à l'isocyanate est compris entre 1:0,5 et 1:1,5, de préférence entre 1:0,7 et 1:0,8.

10. Procédé selon l'une quelconque des revendications 1 à 9, caractérisé en ce que le composé organo-silicique est présent en une quantité qui suffit aussi pour une réaction avec MgO.

11. Panneau de particules caractérisé en ce qu'il a été fabriqué par un procédé selon l'une quelconque des revendications 1 à 10.